# EUROPÄISCHE PATENTSCHRIFT

(11) **EP 0 600 061 B1**
(45) Veröffentlichungstag und Bekanntmachung des Hinweises auf die Patenterteilung: **26.06.1996**
(21) Anmeldenummer: 93912847.6
(22) Anmeldetag: 01.06.1993
(51) Int. Cl.: A23P 1/10

(54) **VERFAHREN ZUR HERSTELLUNG VON FORMKÖRPERN AUS PASTÖSEN LEBENSMITTELN**
PROCESS FOR PRODUCING SHAPED BODIES FROM PASTY FOODSTUFFS
PROCEDE DE FABRICATION DE CORPS MOULES A PARTIR DE PRODUITS ALIMENTAIRES PATEUX

(30) Priorität: 17.06.1992 DE 4219862
(43) Veröffentlichungstag der Anmeldung: 08.06.1994
(73) Patentinhaber: SELLMANN, Juergen, D-59425 Unna (DE)
(72) Erfinder: SELLMANN, Juergen, D-59425 Unna (DE)
(74) Vertreter: Stahl, Gerhard F.W.
(86) Internationale Anmeldenummer: EP9301375
(87) Internationale Veröffentlichungsnummer: WO9325098

(56) Entgegenhaltungen:
- CA-A- 919 495
- CH-A- 565 517
- DE-A- 4 004 688
- US-A- 2 832 299
- DATABASE WPI Section Ch, Week 7111, 1971 Derwent Publications Ltd., London, GB;
- Class D, AN 71-19779

## Beschreibung

Die Erfindung betrifft ein Verfahren zur Herstellung von Formkörpern aus pastösen Lebensmitteln durch plastische Verformung, bei dem eine Menge des Lebensmittels zwischen im Abstand angeordnete Formgesenke und zwischen zwei Folienlagen eingebracht wird und die beiden Formgesenke sodann einander angenähert werden, wobei das Lebensmittel plastisch verformt und eine überschüssige Lebensmittelmenge aus dem Spalt zwischen den beiden Formgesenken ausgequetscht wird. Ein solches Verfahren ist aus CH-A-565 517 bekannt.

Ein derartiges Verfahren ist mit dem Nachteil behaftet, daß das Lebensmittel nach der plastischen Verformung zur Entnahme aus den Formgesenken erfaßt werden muß, wobei die Gefahr einer unbeabsichtigten Verformung der weichen Masse besteht. Außerdem besteht auch die Gefahr einer Verunreinigung des Lebensmittels, falls die Bedienungsperson keine Schutzhandschuhe trägt. Dies gilt auch für die Beseitigung der durch den Spalt zwischen den Formgesenken ausgequetschten überschüssigen Lebensmittelmenge.

Der Erfindung liegt daher die Aufgabe zugrunde, das gattungsgemäße Verfahren dahingehend zu verbessern, daß sowohl eine unbeabsichtigte Verformung als auch eine Verunreinigung des geformten pastösen Lebensmittels bei der Entnahme aus den Formgesenken ausgeschlossen ist.

Erfindungsgemäß wird diese Aufgabe dadurch gelöst, daß das pastöse Lebensmittel zwischen zwei Folienlagen angeordnet wird, die seitlich über die Formgesenke vorstehen, daß das Lebensmittel nach dem Öffnen der Formgesenke mittels der überstehenden Bereiche der Folienlagen entnommen und anschließend auf Erstarrungstemperatur abgekühlt wird und daß sodann die jenseits der Umrißlinie des von dem Lebensmittel gebildeten Formkörpers befindliche überschüssige Lebensmittelmenge von dem Formkörper abgebrochen wird und die beiden Folienlagen entfernt werden.

Nach dem Öffnen der Form kann der von dem pastösen Lebensmittel gebildete Formkörper aus den Formgesenken auf einfache Weise entnommen werden, indem ein überstehender Bereich der beiden Folienlagen erfaßt wird. Da der Formkörper bei diesem Vorgang von der Bedienungsperson nicht berührt wird, ist eine unbeabsichtigte Verformung oder Verunreinigung praktisch ausgeschlossen. Nach dem Abkühlen lassen sich die beiden Folienlagen von dem Formkörper leicht abziehen, wobei ebenfalls keine Gefahr einer unbeabsichtigten Verformung desselben besteht, weil er nicht mehr plastisch, sondern erstarrt ist.

Das Abziehen der Folienlagen kann in der Weise erfolgen, daß sowohl der Formkörper als auch die jenseits seiner Umrißlinie befindliche überschüssige Lebensmittelmenge vor einer unmittelbaren Berührung geschützt ist.

Das Anordnen des pastösen Lebensmittels zwischen zwei Folienlagen einerseits und das Abkühlen des plastisch verformten Lebensmittels auf Erstarrungstemperatur andererseits unterstützen sich daher gegenseitig, weil es nur durch das Zusammenwirken dieser beiden Schritte möglich ist, ein pastöses Lebensmittel auf einfache Weise in eine beliebige Form zu bringen.

Das erfindungsgemäße Verfahren läßt sich bei einer Vielzahl von bei Raumtemperatur verformbaren Lebensmitteln anwenden, und lediglich als Beispiel seien Butter, Margarine, Weichkäse, gekochter Reis, Mehlteig, Kartoffelteig, Speiseeis, Hackfleisch und Fischmasse genannt.

Die Erfindung wird nachfolgend anhand eines in der Zeichnung dargestellten Ausführungsbeispiels näher erläutert. Es zeigt:
Fig. 1 einen schematischen Querschnitt durch eine Form mit einem darin angeordneten pastösen Lebensmittel,
Fig. 2 eine Darstellung ähnlich wie Fig. 1 nach dem Schließen der Form und
Fig. 3 einen Querschnitt durch das aus der Form entnommene Lebensmittel nach erfolgter Abkühlung.

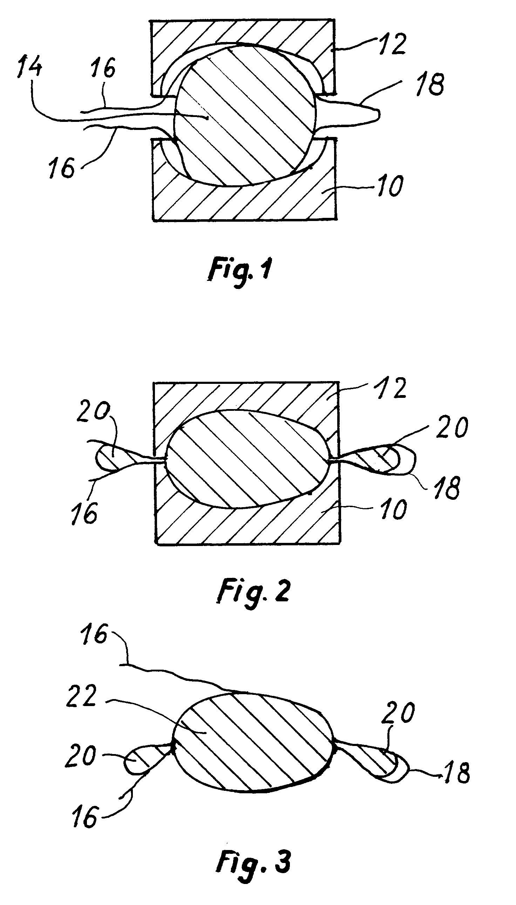

In Fig. 1 der Zeichnung ist eine aus zwei Formgesenken 10, 12 bestehende Form gezeigt, wobei mindestens eines dieser Formgesenke beweglich ist. Eine Menge 14 eines pastösen Lebensmittels, der Einfachheit halber nachfolgend "Butter" genannt, wird auf einer dehnbaren Folie 16 aus Polyethylen angeordnet, die sodann auf sich selbst umgeschlagen wird. Die Folie ist so bemessen, daß sie nach dem Umfalten einen größeren Grundriß hat als die Formgesenke 10, 12. Die Folie 16 kann daher an den überstehenden Bereichen 18 erfaßt werden, um die Buttermenge 14 auf dem unteren Formgesenk 10 anzuordnen.

Wenn daraufhin die beiden Formgesenke 10, 12 einander angenähert werden, dann tritt der in Fig. 1 gezeigte Zustand ein. Bei einer weiteren Annäherung der beiden Formgesenke 10, 12 wird die überschüssige Buttermenge 20 durch den Spalt zwischen den beiden Formgesenken ausgequetscht, so daß sie sich in den überstehenden Bereichen 18 der Folie 16 ansammelt. In dem von den beiden Formgesenken 10, 12 begrenzten Profilhohlraum bildet die Butter einen Körper 22 der gewünschten Form, beispielsweise ein Ei. Dieser Zustand ist in Fig. 2 gezeigt.

Nach dem Öffnen der Form kann der von der Butter gebildete Formkörper 22 entnommen werden, indem die Folie 16 an ihren über die Formgesenke 10, 12 vorstehenden Bereichen 18 erfaßt wird.

Anschließend werden der Formkörper 22 und die überschüssige Buttermenge 20 auf Erstarrungstemperatur abgekühlt, was beispielsweise mit einer Kaltluftströmung bewirkt werden kann. Nach dem Erstarren der Butter kann die überschüssige Buttermenge 20 von dem erstarrten Formkörper 22 leicht abgebrochen werden, und die beiden Lagen der Folie 16 können sodann auseinandergezogen werden, wie dies in Fig. 3 gezeigt ist. Bei diesem Vorgang ist sowohl der Formkörper 22 als auch die überschüssige Buttermenge 20 vor einer unmittelbaren Berührung durch die Bedienungsperson geschützt, und es besteht auch keine Gefahr einer unbeabsichtigten Verformung des Formkörpers 22, weil die Butter verfestigt ist. Der Formkörper 22 kann dann seinem Gebrauchszweck zugeführt werden, während die überschüssige Buttermenge 20 nach erfolgter Erwärmung erneut verformt werden kann.

## Patentansprüche

1. Verfahren zur Herstellung von Formkörpern aus pastösen Lebensmitteln durch plastische Verformung, bei dem eine Menge des Lebensmittels zwischen zwei im Abstand angeordnete Formgesenke und zwischen zwei Folienlagen eingebracht wird und die beiden Formgesenke sodann einander angenähert werden, wobei das Lebensmittel plastisch verformt und eine überschüssige Lebensmittelmenge aus dem Spalt zwischen den beiden Formgesenken ausgequetscht wird, dadurch **gekennzeichnet**, daß die
Folienlagen seitlich über die Formgesenke vorstehen, daß das Lebensmittel nach dem Öffnen der Formgesenke mittels der überstehenden Bereiche der Folienlagen entnommen und anschließend auf Erstarrungstemperatur abgekühlt wird und daß sodann die jenseits der Umrißlinie des von dem Lebensmittel gebildeten Formkörpers befindliche überschüssige Lebensmittelmenge von dem Formkörper abgebrochen wird und die beiden Folienlagen entfernt werden.

2. Verfahren nach Anspruch 1, dadurch **gekennzeichnet**, daß die Menge des pastösen Lebensmittels auf eine Folie aufgelegt wird, die anschließend zu sich selbst umgefaltet wird.

## Claims

1. Process for producing shaped bodies from pasty foodstuffs by plastic deformation, wherein a quantity of the foodstuff is introduced between two dies which are arranged spaced apart from each other and between two foil layers and the two dies are then moved toward each other, so that the foodstuff is plastically deformed and any excess quantity of foodstuff is squeezed out of the gap between the two dies, characterized in that the
foil layers laterally protrude out of the dies, that the foodstuff is removed after opening of the dies by means of the protruding portions of the foil layers and is subsequently cooled to solidification temperature, and that the excess foodstuff quantity located outside of the contour of the shaped body formed by the foodstuff is then broken off from the shaped body and the two foil layers are removed.

2. Process according to claim 1, characterized in that the quantity of the pasty foodstuff is placed on a foil which is subsequently folded onto itself.

## Revendications

1. Procédé de fabrication d'un corps moulé à partir d'un produit alimentaire pâteux, par déformation plastique, selon lequel une certaine quantité de produit alimentaire est placée entre deux cavités de moule écartées l'une de l'autre et entre deux couches de feuilles, puis on rapproche les deux cavités de moule, le produit alimentaire subissant une déformation plastique et la quantité de produit alimentaire en excédent s'expulsant de l'intervalle entre les deux cavités de moule,
caractérisé en ce que
les couches de feuilles dépassent latéralement de la cavité de moule, le produit alimentaire, après ouverture des cavités de moule, est enlevé en utilisant les zones en dépassement des couches de feuilles, puis on refroidit à la température de figeage et on enlève, en la cassant par rapport au corps moulé, la quantité excédentaire de produit alimentaire située de l'autre côté du contour du corps moulé formé par le produit alimentaire, et on enlève les deux couches de feuilles.

2. Procédé de fabrication d'un corps moulé, selon la revendication 1,
caractérisé en ce que
la quantité de produit alimentaire pâteux est placée sur une feuille puis cette feuille est repliée sur elle-même.
